# EUROPEAN PATENT SPECIFICATION

(11) **EP 4 499 416 B1**
(45) Date of publication and mention of the grant of the patent: **25.11.2026**
(21) Application number: 23717722.5
(22) Date of filing: 22.03.2023
(51) Int. Cl.: B60B 35/12, B60K 7/00, B60K 17/04, B62B 3/06, B62B 5/00

(54) **HUB MOTOR WITH INTEGRATED BRAKE**
NABENMOTOR MIT INTEGRIERTER BREMSE
MOTEUR SUR MOYEU À FREIN INTÉGRÉ

(30) Priority: 24.03.2022 US 202263323328 P
(43) Date of publication of application: 05.02.2025
(73) Proprietor: Rehrig Pacific Company, Los Angeles, CA 90058 (US)
(72) Inventor: KALINOWSKI, Dane, Gin Mun, Foothill Ranch, California 92610 (US); ENGLERT, Travis, James, Brea, California 92821 (US)
(74) Representative: Dehns
(86) International application number: PCT/US2023/015922
(87) International publication number: WO 2023/183399

(56) References cited:
- EP-A1- 3 865 330
- EP-A2- 1 160 475
- CN-A- 107 303 235
- DE-A1- 19 837 270
- US-A- 3 812 928
- US-A- 5 796 192
- US-A- 6 057 617
- US-A1- 2018 334 368

## Description

### BACKGROUND

A powered delivery sled having a compact electric hub motor is currently being sold by the assignee of the present invention to provide a manual push mode, powered drive assist mode and full powered drive mode to deliver product from a trailer to a store. The current hub motor provides a great solution for delivery but requires a separate parking brake to hold the sled at a standstill when stopped.

The current hub motor has the ability to utilize the electromagnetic windings to apply a brake when powered. However, the current hub motor does not have any sort of integrated parking brake or friction brake feature and typically relies on another system to hold the product at a standstill.
US 5,796,192 discloses an energy-saving electric drive for small vehicles.
CN 107,303,235 discloses a modular electric wheel group of walking aids.

### SUMMARY

Several embodiments disclosed herein build upon the existing hub motor to integrate a parking brake or friction brake into the hub motor to maintain the compact, full power packaging. The integration of the brake gives the compact hub motor package full capability similar to an electric pallet jack drive but in a smaller, lighter weight package.

This allows for lighter, more compact equipment to be more full-featured for deliveries up and down ramps, throughout parking lots, etc. while still being able to get into tight restaurants and coolers.

Optionally, the parking brake may also assist the hub motors in slowing the sled down, e.g. when on ramps.

The parking brake could be electrical, non-electrical, mechanical, internal and/or external to the hub motor. Since making it electrical may be an issue if the battery dies, one option disclosed herein is to automatically apply the parking brake when the unit is without battery, i.e. the brake will fail to the braked status.

### BRIEF DESCRIPTION OF THE DRAWINGS

Figure 1 shows an example pallet sled in which the hub motor brake is used.
Figure 2 shows the pallet sled of Figure 1 with a back panel removed.
Figure 3 is a bottom view of the pallet sled of Figure 1.
Figure 4 shows one arrangement of the wheel assembly with integrated brake that could be used in the pallet sled of Figure 1.
Figure 5 shows one possible specific implementation of the wheel assembly of Figure 4 with a first example brake assembly.
Figure 6 shows a second possible implementation of the wheel assembly with integrated brake of Figure 4.
Figure 7 shows a third possible implementation of the wheel assembly with integrated brake of Figure 4.
Figure 8 shows a fourth possible implementation of the wheel assembly with integrated brake of Figure 4.

### DETAILED DESCRIPTION

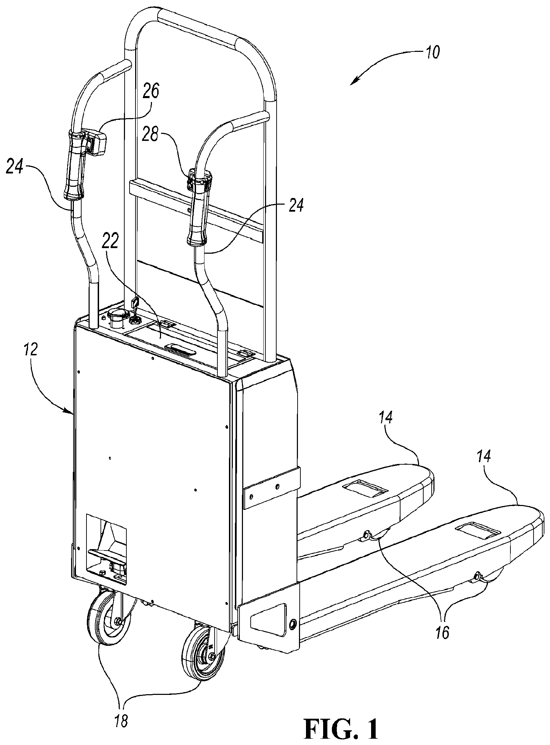

An example of a powered sled 10 for transporting objects such as pallets is shown in Figure 1. The sled 10 includes a lift module or base 12 connected to a pair of tines 14 extending forward of the base 12. The base 12 can raise and lower the tines 14, such as by leveraging the load wheels 16 supporting outer ends of the tines 14. Casters 18 may support the base 12.

A battery 22 is also mounted in the base 12 for driving motors within the load wheels 16, as will be explained below. Upright handles 24 extend upward from the base 12. Alternatively, the sled 10 could have a pivotable tiller arm for steering a rear wheel supporting the base, similar to a traditional pallet jack. A lift control lever 26 is connected to the handles 24. A throttle control lever 28 is also connected to the handles 24. The load wheels 16 include hub motors. The hub motors selectively receive power from the battery 22 to drive the load wheels 16 rotatably. Both hub motors may be controlled by the single throttle lever 28. One or more planetary gearsets may connect the hub motor to the load wheel 16.

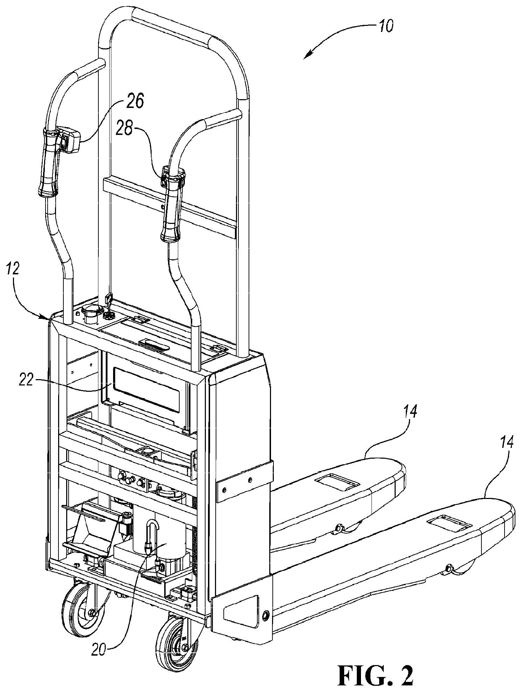

Figure 2 shows the sled 10 with a rear cover removed. The sled 10 that is shown includes an electro-hydraulic pump 20 for raising and lowering the tines 14. The pump 20 may be powered by the removable battery 22. Alternatively, a hydraulic foot pump or other mechanism for lifting the tines 14 may be utilized.

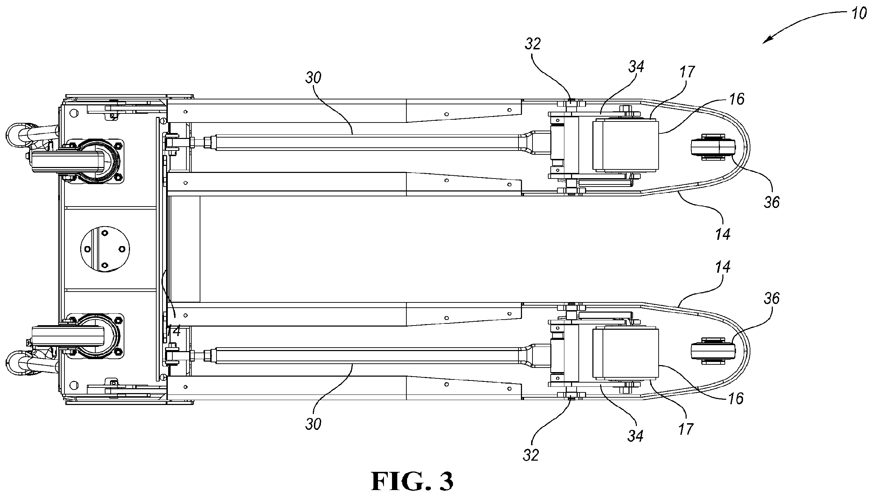

Figure 3 is a bottom view of the sled 10. Referring to Figure 3, each load wheel 16 is mounted at the end of a pair of arms 34, which are pivotably mounted at opposite ends to the tine 14 at pivot axis 32. As is well-known, a push rod 30 leverages the arms 34 up and down to raise and lower the load wheels 16. In this example, the push rods 30 are powered by the pump 20 (Figure 2) as controlled by the lift control lever 26 (Figure 1).

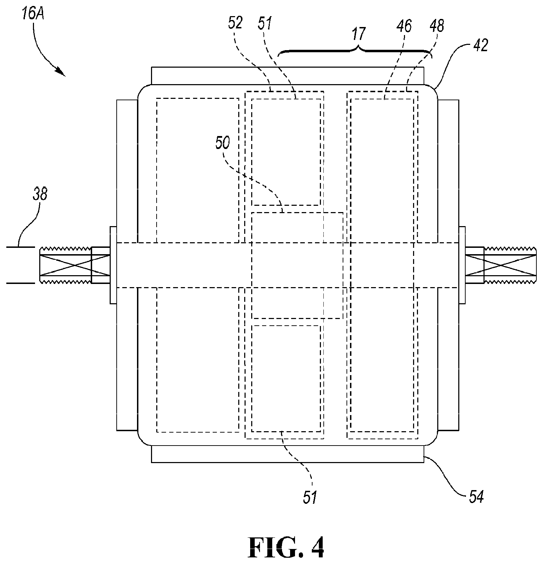

The load wheels 16 include hub motors 17. The hub motors 17 selectively receive power from the battery 22 (Figure 1) to drive the load wheels 16 rotatably. Both hub motors 17 may be controlled by the single throttle lever 28 (Figure 1). Alternatively, dual throttle controls (one for each hub motor 17) would allow the operator to steer the sled 10. A free spinning lead wheel 36 is mounted at the front of each tine 14 and spaced above the floor (Figure 4) to assist in contact with curbs, ramps, etc. As another alternative, a hub motor 17 may be provided in only one of the load wheels 16, while the other load wheel is free spinning.

Figure 4 shows one embodiment of a load wheel 16A that could be used as one or both of the load wheels 16 in the pallet sled 10 of Figure 1. The load wheel 16A has an axle 38 extending therethrough and integrates a brake assembly 40 within the hub motor body 42 or housing. The brake assembly 40 may be an electric pallet jack (EPJ) style electromagnetic (EM) brake. Alternatively, the brake assembly 40 may be a drum brake or a pawl brake.

There may be a tread 44 on the outer surface of the hub motor body 42. The hub motor 17 and the brake assembly 40 are both within the hub motor body 42 and within the tread 44. According to one known configuration, the hub motor 17 includes a stator 46 fixed to the axle 38. A rotor 48 circumscribes the stator 46 and is rotatable relative to the stator 46, the axle 38 and the hub motor body 42. The rotor 48 is connected to a planetary gearset which is in turn coupled to a ring gear 52, which is fixed to the hub motor body 42. More specifically, the rotor 48 is fixed to a sun gear 50 which is coupled to a plurality of planet gears 51 (two are illustrated, but three or more would likely be used). The planet gears 51 engage the inner circumference of the ring gear 52. The ring gear 52 is fixed to the hub motor body 42.

In use, the hub motor 17 (e.g. one in each load wheel 16) may have power selectively applied thereto to power the pallet sled 10 (Figure 1). More specifically, the stator 46 drives the rotor 48 rotatably about the axle 38. The rotating rotor 48 drives the sun gear 50, which is coupled via the planet gears 51 to the ring gear 52. The ring gear 52 is fixed to the interior of the hub motor body 42, so the hub motor body 42 is rotatably driven about the axle 38.

To slow down or provide a controlled descent down a ramp or other incline, the user can apply a braking force to the hub motor body 42 via controlling the stator 46. When parked or otherwise not rolling, the brake assembly 40 can also be applied. The brake assembly 40 couples the hub motor body 42 to the axle 38, thereby preventing (or inhibiting) relative rotation between the two. As will be explained below, the brake assembly 40 may have a "fail on" feature, i.e. if power to the brake assembly 40 is disconnected, the brake assembly 40 applies a braking force tending to inhibit rotation of the hub motor body 42 relative to the axle 38.

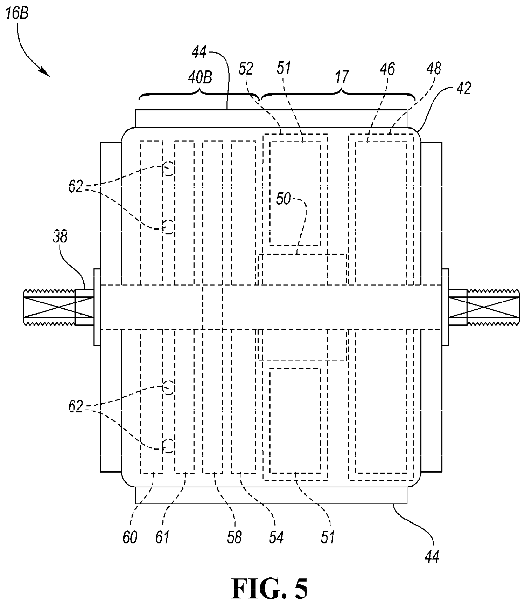

Figure 5 shows a load wheel 16B which is one specific example implementation of the load wheel 16A of Figure 4 in which the brake assembly 40 is a disk brake assembly 40B. The motor portion of the load wheel 16B is the same as that of Figure 4, i.e. the stator 46, rotor 48, sun gear 50, planet gears 51, and ring gear 52 are the same as in Figure 4.

The brake assembly 40B includes a friction disk 54, a brake pad 58 and an electromagnetic pressure plate assembly 60, each annular in shape so as to be received on the axle 38 of the load wheel 16A. The friction disk 54 is fixed to the sun gear 50 (or alternatively, the hub motor body 42) so that it rotates about the axle 38 with the sun gear 50 (or with the hub motor body 42). The electromagnetic pressure plate assembly 60 is fixed to the axle 38 (and/or fixed to some external structure but fixed relative to the axle 38). The brake pad 58 is rotatably coupled to the axle 38 and slidable relative to the axle 38 along the axis of the axle 38. The brake pad 58 is normally slightly spaced away from both the electromagnetic pressure plate assembly 60 and the friction disk 54.

Within the electromagnetic pressure plate assembly 60, a plurality of springs 62 bias a pressure plate 61 toward the brake pad 58. The pressure plate 61 is slidable axially relative to the axle 38. When permitted, the springs 62 bias the pressure plate 61 into the brake pad 58, thereby sliding the brake pad 58 forcibly toward the friction disk 54 to lock the hub motor body 42 to the axle 38. When the electromagnetic pressure plate assembly 60 is activated, the pressure plate 61 is drawn away from the brake pad 58 (e.g. by an electromagnetic coil), thereby compressing the springs 62 such that brake pad 58 is spaced from both the pressure plate 61 and the friction disk 54. A wire harness connects the electromagnetic pressure plate assembly 60 to a controller of the sled 10 and/or a parking brake button for the user.

The brake assembly 40B operates as a fail-on brake and utilizes the springs 62 to compress the brake pad 58 against the friction disk 54, which is fixedly secured to the hub motor body 42. When the brake assembly 40B is energized upon turning the sled 10 on or engaging the throttle (for example), the coils in the electromagnetic pressure plate assembly 60 charge and pull the brake pad 58 away from the friction disk 54, thereby unlocking the hub motor body 42 from the axle 38, so that the hub motor body 42 can rotate about the axle 38.

When the user parks the sled 10, the user can press a button, turn a key, pull a lever, etc, to activate the brake assembly 40B as a parking brake. The sled 10 disconnects power from the electromagnetic pressure plate assembly 60, thereby permitting the springs 62 to press the brake pad 58 against the friction disk 54, thereby locking the hub motor body 42 relative to the axle 38, i.e. locking the load wheel 16B against rotation.

This embodiment largely utilizes an electromagnetic brake mechanism but repackaged into the hub motor body 42 (i.e. within the same housing) inline with the hub motor 17 and gearset. Having the brake internalized within the hub motor body 42 allows the load wheel 16B to have a wider tread 44 to match the overall footprint. The load wheel 16B of Figure 5 could be used as the load wheels 16 of Figures 1-3.

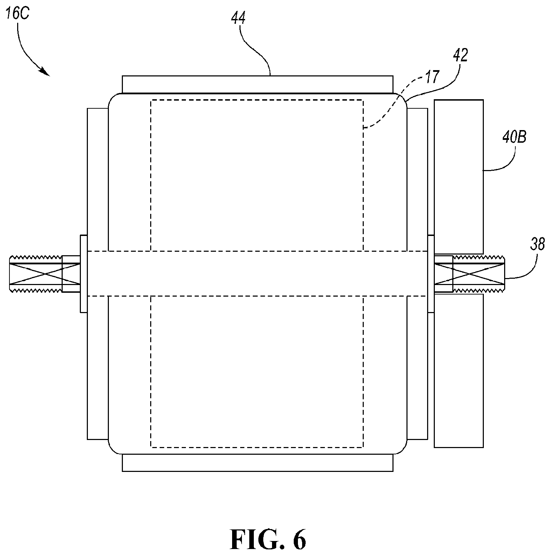

If packaging within the hub motor body is an issue, the brake assembly 40B could be mounted external to the hub motor and still remain inline with the rotation axis, as shown in Figure 6. The external brake assembly 40B may shorten the length of the tread 44 while maintaining the same, wide overall footprint. The load wheel 16C of Figure 6 could be used as the load wheels 16 of Figures 1-3.

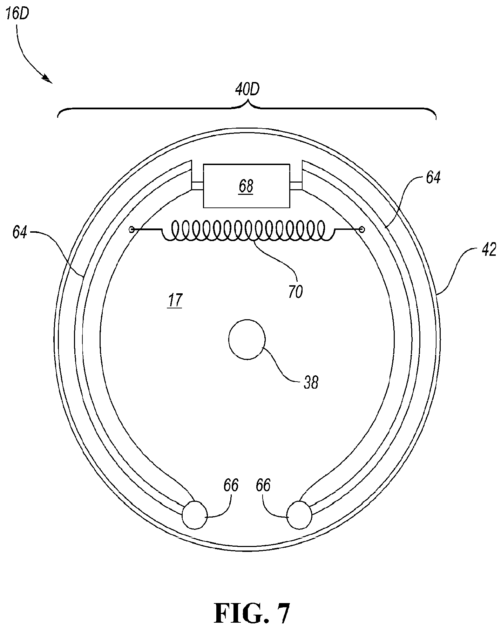

In another embodiment shown in Figure 7, a drum brake assembly 40D is integrated within the hub motor body 42 of a load wheel 16D that can be used as the load wheels 16 in the pallet sled 10 of Figures 1-4. The drum brake assembly 40D could be used as the brake assembly 40 of Figure 4, again adjacent the hub motor 17 and within the hub motor body 42. The drum brake assembly 40D includes at least one (preferably two) brake shoes 64 pivotably mounted to the pallet sled 10 (i.e. fixed relative to the axle 38) at two pivot points 66. An actuator 68 (such as hydraulic, or electric, or manual via linkage, etc) is connected to the opposite ends of the brake shoes 64. A spring 70 also connects the ends of the brake shoes 64 away from the pivot points 66. Preferably, the spring 70 biases the brake shoes 64 away from one another, i.e. such that they pivot on the two pivot points 66 into the inner surface of the hub motor body 42. When activated, the actuator 68 pulls the ends of the brake shoes 64 toward one another, i.e. away from the inner surface of the hub motor body 42.

The electrically controlled drum brake assembly 40D holds the hub motor 17 and load wheel 16D stationary when engaged (i.e. when no power is applied to the actuator 68 to prevent the hub motor 17 and load wheel 16D from rotating. The drum brake assembly 40D is mounted within the hub motor body 42 of the hub motor hub motor 17 and uses the actuator 68 to counter the spring 70 that applies the brake shoes 64 radially outward against the inside diameter of the hub motor body 42, which acts as the brake drum. Again, if power to the actuator 68 is cut, the spring 70 applies the brake.

As in the previous embodiment, the drum brake assembly 40D could automatically engage and disengage, or be activated by the operator.

In another embodiment, not illustrated, the drum brake assembly 40D may be integrated external to the hub motor body 42. This embodiment is similar to the previous embodiment, but the drum brake assembly 40D is mounted outside the hub motor body 42 of the hub motor 17 and applies brake shoes or brake pads directly against the outside diameter of the hub motor body 42 tread 44 to prevent the hub motor 17 from rotating.

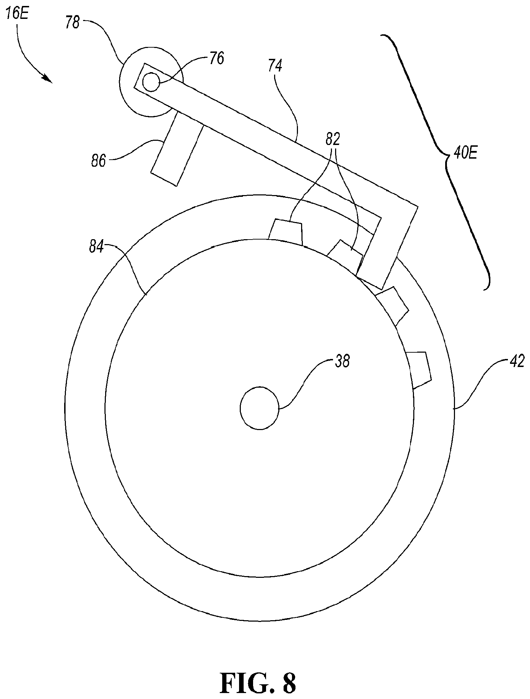

Figure 8 shows another embodiment of a hub motor 16E that could be used in the pallet sled 10 of Figure 1. A parking pawl brake assembly 40E can be integrated with the hub motor body 42. The parking pawl brake assembly 40E includes a pawl 74 pivotably coupled to the pallet sled 10 (Figure 1) about a pivot point 76. A spring 78 (such as a torsion spring) biases the pawl 74 in a rotatable direction such that the opposite end of the pawl 74 is biased into engagement with a plurality of teeth 82 on a drum 84 that is coupled to the hub motor body 42, the sun gear 50 (Figure 4), the ring gear 52 (Figure 4), or other rotating component. An actuator 86 is configured to pivot the pawl 74 out of engagement. The actuator 86 may be an electric actuator, such that it releases in the absence of power.

The parking pawl brake assembly 40E locks the hub motor 17 internally when engaged, to prevent the hub motor body 42 from rotating relative to the axle 38 or the remainder of the pallet sled 10. This is similar to how a parking pawl functions within an automatic transmission by locking the rotation of the output shaft, but the hub motor shaft does not rotate. Therefore, instead, the pawl 74 could engage with the existing sun gear, planet gears or ring gear of the planetary gearset. The pawl 74 could also engage with a new internal component that interacts with the ring gear or directly on notches on the inside diameter of the hub motor body 42.

The electrically controlled actuator 86 could be configured to automatically engage and disengage the pawl parking brake assembly 40E based on hub motor body 42 rotation. If the hub motor body 42 is stopped, the pawl parking brake assembly 40E would automatically be applied by disengaging the actuator 86 and permitting the spring 78 to bias the pawl 74 into the teeth 82. When the hub motor starts driving, the pawl parking brake assembly 40E would automatically be disengaged, e.g. by activating the actuator 86 to move the pawl 74 away from the teeth 82. The pawl parking brake assembly 40E could also be activated by the operator and controls would be in place to ensure the pawl parking brake assembly 40E can only be set when the hub motor has stopped rotating.

## Claims

1. A hub motor (17) comprising:
a hub motor body (42);
an axle (38) extending into the hub motor body (42);
a rotor (48) connected to a sun gear (50) of a planetary gearset, wherein the sun gear (50) is coupled to a ring gear (52) by a plurality of planet gears (51), and the ring gear (52) is fixed to the hub motor body (42);
a stator (46) within the rotor (48) and fixed to the axle (38), wherein the rotor (48) is rotatable relative to the stator (46) and wherein the hub motor body (42) is rotatable about the axle (38); and
a brake (40) within the hub motor body (42), and **characterized in that** the brake (40) including a friction disk (54) fixed to the sun gear (50) and a brake pad (58) coupled to the axle (38),
wherein the brake (40) includes at least one spring (62) biasing the brake pad (58) into braking engagement with the friction disk (54),
wherein the brake (40) further includes at least one coil preventing braking engagement of the brake pad (58) when the at least one coil is energized, wherein the at least one coil is positioned within the hub motor body (42).

2. The hub motor (17) of claim 1 further including a tread (44) on an outer surface of the hub motor body (42), wherein the brake (40) is positioned within the tread (44) and the stator (46) is positioned within the tread (44).

3. The hub motor (17) of claim 1 wherein the brake (40) engages to inhibit relative rotation between the hub motor body (42) and the axle (38) in an absence of power applied to the brake (40).

4. The hub motor (17) of any preceding claim wherein the brake pad (58) is slidable relative to the axle (38) along the axis of the axle (38).

5. The hub motor (17) of any preceding claim wherein the brake (40) comprises an electromagnetic pressure plate assembly (60) fixed to the axle (38).

6. The hub motor (17) of any preceding claim wherein the brake (40) includes at least one spring (62) biasing a pressure plate (61) toward the brake pad (58).

7. The hub motor (17) of any preceding claim further including a tread (44) on an outer surface of the hub motor body (42), wherein the brake (40) is positioned within the tread (44) and wherein the stator (46) is within the tread (44).

8. The hub motor (17) of claim 7 wherein the planetary gearset is within the tread (44).

9. A pallet sled (10) including a base (12) and at least one tine (14) extending forward of the base (12), the pallet sled (10) further including at least one hub motor (17) of claim 1 powering a load wheel (16) supporting the at least one tine (14).

10. The pallet sled (10) of claim 9 wherein the axle (38) extends through the load wheel (16).

11. The pallet sled (10) of claim 9 or 10 wherein the hub motor (17) is within the load wheel (16).

12. The pallet sled (10) of any of claims 9 to 11 further including a tread (44) on an outer surface of the hub motor body (42), wherein the brake (40) is positioned within the tread (44), wherein the stator (46) is within the tread (44), and wherein the planetary gearset is within the tread (44).

13. The pallet sled (10) of any of claims 9 to 12 wherein the brake pad (58) is slidable relative to the axle (38) along the axis of the axle (38).

## Patentansprüche

1. Nabenmotor (17), umfassend:
einen Nabenmotorkörper (42);
eine Achse (38), die sich in den Nabenmotorkörper (42) hinein erstreckt;
einen Rotor (48), der mit einem Sonnenrad (50) eines Planetengetriebes verbunden ist, wobei das Sonnenrad (50) durch eine Vielzahl von Planetenrädern (51) mit einem Hohlrad (52) gekoppelt ist und das Hohlrad (52) an dem Nabenmotorkörper (42) befestigt ist;
einen Stator (46) innerhalb des Rotors (48) und befestigt an der Achse (38), wobei der Rotor (48) relativ zu dem Stator (46) drehbar ist und wobei der Nabenmotorkörper (42) um die Achse (38) drehbar ist; und
eine Bremse (40) innerhalb des Nabenmotorkörpers (42), und **dadurch gekennzeichnet, dass** die Bremse (40) eine an dem Sonnenrad (50) befestigte Reibscheibe (54) und einen mit der Achse (38) gekoppelten Bremsbelag (58) einschließt,
wobei die Bremse (40) mindestens eine Feder (62) einschließt, die den Bremsbelag (58) in Bremseingriff mit der Reibscheibe (54) vorspannt,
wobei die Bremse (40) weiter mindestens eine Spule einschließt, die den Bremseingriff des Bremsbelags (58) verhindert, wenn die mindestens eine Spule erregt ist, wobei die mindestens eine Spule innerhalb des Nabenmotorkörpers (42) positioniert ist.

2. Nabenmotor (17) nach Anspruch 1, der weiter ein Profil (44) an einer Außenfläche des Nabenmotorkörpers (42) einschließt, wobei die Bremse (40) innerhalb des Profils (44) positioniert ist und der Stator (46) innerhalb des Profils (44) positioniert ist.

3. Nabenmotor (17) nach Anspruch 1, wobei die Bremse (40) eingreift, um eine relative Drehung zwischen dem Nabenmotorkörper (42) und der Achse (38) zu hemmen, wenn keine Leistung an die Bremse (40) zugeführt wird.

4. Nabenmotor (17) nach einem vorstehenden Anspruch, wobei der Bremsbelag (58) relativ zu der Achse (38) entlang der Achse der Achse (38) verschiebbar ist.

5. Nabenmotor (17) nach einem vorstehenden Anspruch, wobei die Bremse (40) eine an der Achse (38) befestigte elektromagnetische Druckplattenanordnung (60) umfasst.

6. Nabenmotor (17) nach einem vorstehenden Anspruch, wobei die Bremse (40) mindestens eine Feder (62) einschließt, die eine Druckplatte (61) in Richtung des Bremsbelags (58) vorspannt.

7. Nabenmotor (17) nach einem vorstehenden Anspruch, der weiter ein Profil (44) an einer Außenfläche des Nabenmotorkörpers (42) einschließt, wobei die Bremse (40) innerhalb des Profils (44) positioniert ist und wobei sich der Stator (46) innerhalb des Profils (44) befindet.

8. Nabenmotor (17) nach Anspruch 7, wobei sich das Planetengetriebe innerhalb des Profils (44) befindet.

9. Palettenschlitten (10) einschließlich einer Basis (12) und mindestens einer Zinke (14), die sich vor der Basis (12) erstreckt, wobei der Palettenschlitten (10) weiter mindestens einen Nabenmotor (17) nach Anspruch 1 einschließt, der ein Lastrad (16) antreibt, das die mindestens eine Zinke (14) trägt.

10. Palettenschlitten (10) nach Anspruch 9, wobei sich die Achse (38) durch das Lastrad (16) erstreckt.

11. Palettenschlitten (10) nach Anspruch 9 oder 10, wobei sich der Nabenmotor (17) innerhalb des Lastrads (16) befindet.

12. Palettenschlitten (10) nach einem der Ansprüche 9 bis 11, der weiter ein Profil (44) an einer Außenfläche des Nabenmotorkörpers (42) einschließt, wobei die Bremse (40) innerhalb des Profils (44) positioniert ist, wobei sich der Stator (46) innerhalb des Profils (44) befindet und wobei sich das Planetengetriebe innerhalb des Profils (44) befindet.

13. Palettenschlitten (10) nach einem der Ansprüche 9 bis 12, wobei der Bremsbelag (58) relativ zu der Achse (38) entlang der Achse der Achse (38) verschiebbar ist.

## Revendications

1. Moteur (17) sur moyeu comprenant :
un corps (42) de moteur sur moyeu ;
un axe (38) s'étendant dans le corps (42) de moteur sur moyeu ;
un rotor (48) relié à une roue solaire (50) d'un train planétaire, dans lequel la roue solaire (50) est couplée à une couronne (52) par une pluralité d'engrenages planétaires (51), et la couronne (52) est fixée au corps (42) de moteur sur moyeu ;
un stator (46) à l'intérieur du rotor (48) et fixé à l'axe (38), dans lequel le rotor (48) est rotatif par rapport au stator (46) et dans lequel le corps (42) de moteur sur moyeu est rotatif autour de l'axe (38) ; et
un frein (40) à l'intérieur du corps (42) de moteur sur moyeu, et **caractérisé en ce que** le frein (40) inclut un disque de friction (54) fixé à la roue solaire (50) et une plaquette (58) de frein couplée à l'axe (38),
dans lequel le frein (40) inclut au moins un ressort (62) sollicitant la plaquette (58) de frein en contact de freinage avec le disque de friction (54),
dans lequel le frein (40) inclut en outre au moins une bobine empêchant le contact de freinage de la plaquette (58) de frein lorsque l'au moins une bobine est alimentée, dans lequel l'au moins une bobine est positionnée à l'intérieur du corps (42) de moteur sur moyeu.

2. Moteur (17) sur moyeu selon la revendication 1 incluant en outre une surface de roulement (44) sur une surface externe du corps (42) de moteur sur moyeu, dans lequel le frein (40) est positionné à l'intérieur de la surface de roulement (44) et le stator (46) est positionné à l'intérieur de la surface de roulement (44).

3. Moteur (17) sur moyeu selon la revendication 1, dans lequel le frein (40) vient en prise pour inhiber la rotation relative entre le corps (42) de moteur sur moyeu et l'axe (38) en l'absence de puissance appliquée au frein (40).

4. Moteur (17) sur moyeu selon une quelconque revendication précédente dans lequel la plaquette (58) de frein est coulissante par rapport à l'axe (38) le long de l'axe dudit axe (38).

5. Moteur (17) sur moyeu selon une quelconque revendication précédente dans lequel le frein (40) comprend un ensemble de plaque de pression électromagnétique (60) fixé à l'axe (38).

6. Moteur (17) sur moyeu selon une quelconque revendication précédente, dans lequel le frein (40) inclut au moins un ressort (62) sollicitant une plaque de pression (61) vers la plaquette (58) de frein.

7. Moteur (17) sur moyeu selon une quelconque revendication précédente incluant en outre une surface de roulement (44) sur une surface externe du corps (42) de moteur sur moyeu, dans lequel le frein (40) est positionné à l'intérieur de la surface de roulement (44) et dans lequel le stator (46) est à l'intérieur de la surface de roulement (44).

8. Moteur (17) sur moyeu selon la revendication 7, dans lequel le train planétaire est à l'intérieur de la surface de roulement (44).

9. Chariot (10) à palettes incluant une base (12) et au moins une dent (14) s'étendant vers l'avant de la base (12), le chariot (10) à palettes incluant en outre au moins un moteur (17) sur moyeu selon la revendication 1 alimentant une roue de charge (16) supportant l'au moins une dent (14).

10. Chariot (10) à palettes selon la revendication 9, dans lequel l'axe (38) s'étend à travers la roue de charge (16).

11. Chariot (10) à palettes selon la revendication 9 ou la revendication 10, dans lequel le moteur (17) sur moyeu est à l'intérieur de la roue de charge (16).

12. Chariot (10) à palettes selon l'une quelconque des revendications 9 à 11 incluant en outre une surface de roulement (44) sur une surface externe du corps (42) de moteur sur moyeu, dans lequel le frein (40) est positionné à l'intérieur de la surface de roulement (44), dans lequel le stator (46) est à l'intérieur de la surface de roulement (44) et dans lequel le train planétaire est à l'intérieur de la surface de roulement (44).

13. Chariot (10) à palettes selon l'une quelconque des revendications 9 à 12, dans lequel la plaquette (58) de frein est coulissante par rapport à l'axe (38) le long de l'axe dudit axe (38).
